# EUROPEAN PATENT APPLICATION

(11) **EP 1 207 685 A2**
(43) Date of publication of application: **22.05.2002**
(21) Application number: 01127663.1
(22) Date of filing: 20.11.2001
(51) Int. Cl.: H04N 3/15, H04N 9/04

(54) **Color image pickup device with pixel shifting**

(30) Priority: 21.11.2000 JP 2000354369
(71) Applicant: Hitachi, Ltd., Chiyoda-ku, Tokyo 101-8010 (JP)
(72) Inventor: Tetsuya, Hori, c/o Hitachi, Ltd., Intell. Prop. Gr, Chiyoda-ku, Tokyo 100-8220 (JP); Konishi, Yoshiharu, Hitachi, Ltd., Intel. Prop. Gr, Chiyoda-ku, Tokyo 100-8220 (JP)
(74) Representative: Strehl Schübel-Hopf & Partner

(57) **Abstract**

An image processing apparatus for acquiring a monochromatic image of high resolution within a short time by using the pixel shift method for a color imaging device. The apparatus comprises an imaging optical system, a color imaging device including a plurality of sets of four filters two of which are used for a single color (G) selected from the three primary colors (R, G, B) for generating pixel data for each color, a shift drive unit for shifting the imaging optical system and the color imaging device relatively to each other by a length corresponding to a predetermined number of pixels in the imaging surface, and an image synthesizing unit, the color imaging device being arranged on the imaging surface of the imaging optical system. The image synthesizing unit generates one monochromatic image only from the pixel data of the same color (G) in different relative positions before and after the shift.

## Description

### BACKGROUND OF THE INVENTION

The present invention relates to an image processing apparatus and method, or in particular to an image processing apparatus and method for generating a monochromatic image of high resolution using the technique of pixel shift in a color imaging device having a plurality of two-dimensionally arranged photo detectors.

A solid state image sensing device such as CCD has an imaging surface with a plurality of photo detectors two-dimensionally arranged thereon and forms an image of an object on the imaging surface thereof using an imaging optical system. The resolution of the imaging device is determined by the pitch at which the photo detectors are arranged. For improving the resolution, therefore, the density with which the photo detectors are arranged is required to be increased. An increased density with which the photo detectors are arranged, however, both makes it more difficult to fabricate the imaging device and increases the fabrication cost of the imaging device. Also, an increased density with which the photo detectors are arranged and the resultant reduced size of pixels decreases the sensitivity of the individual photo detectors, as a result, the sensitivity of the imaging device is decreased.

JP-A-10-304235 discloses a method of forming a color image using the technique of what is called "image shift", in which a plurality of images are picked up by shifting the imaging surface of a solid state image sensing device by a predetermined amount each time, and then a plurality of these images picked up are synthesized to generate a color image of high resolution.

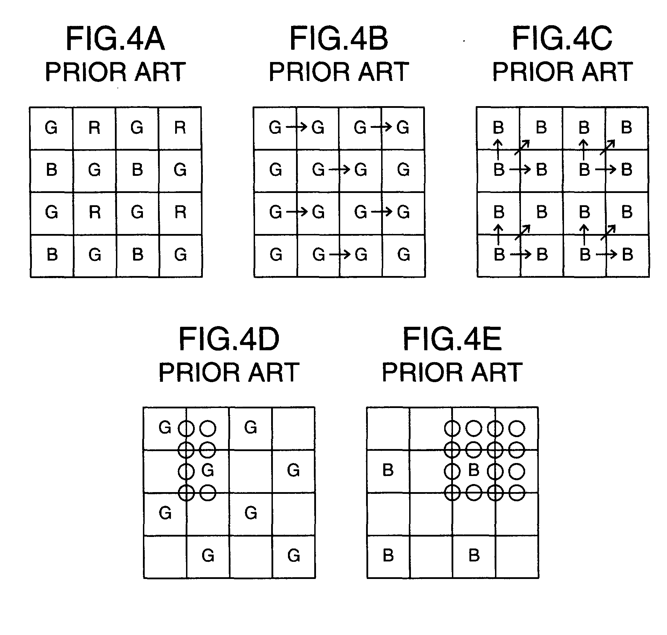

Fig. 4 is a diagram showing a conventional method of acquiring a monochromatic image. A monochromatic image of high resolution can be acquired using a plurality of color images generated by the image shift technique. Fig. 4A is a diagram showing an array of color filters for the three primary colors of R, G, B arranged at positions corresponding to the photo detectors constituting the imaging surface of a color imaging device. This method of layout is known as the Bayer scheme. In the Bayer scheme, green (G) filters for the luminance signal requiring high resolution are arranged checkerwise, and the remaining filters including alternate groups of red (R) filters and blue (B) filters are arranged checkerwise. Thus, the green (G) filters are arranged with the density (resolution) of one half of all the photo detectors, and the red (R) and blue (B) filters with the density of one fourth of all the photo detectors.

In the prior art, three images having the same resolution are generated for the colors R, G and B. Specifically, a plurality of image data are acquired for each color by pixel shift in such a manner as to assure the same level of the resolution as the density of arrangement of the photo detectors for each color. First, as for green (G), the image data is acquired first from given relative positions of the color imaging device and the object image, and then by shifting the relative positions of the color imaging device and the object image by a pitch of one pixel as indicated by arrows in Fig. 4B. Only the green (G) portions of the two image data thus acquired are extracted thereby to generate a single image composed of the green (G) portions. As for blue (B), on the other hand, a total of four image data are acquired by shifting the relative positions of the color imaging device and the object image by a pitch of one pixel in three different directions as indicated by arrows in Fig. 4C, and then only the blue (B) portions of the four image data thus acquired are extracted thereby to generate a single image composed of the (B) portions. In similar fashion, as for red (R), a total of four images are acquired by shifting the relative positions of the color imaging device and the object image by a pitch of one pixel in three different directions as indicated by arrows in Fig. 4C, and then only the red (R) portions of the four acquired image data are extracted thereby to generate a single image composed of the (R) portions. The resolution of the monochromatic images acquired as described above is twice as high for green G and four times as high for blue B and red R, so that the same resolution is secured for R, G and B.

In the case where the relative positions of the color imaging device and the object image are shifted by a pitch of one half pixel, in contrast, the image data can be acquired which has a density twice as high as the density with which the photo detectors are arranged for each color. Specifically, as for green (G), as shown in Fig. 4D, eight image data having different relative positions of the color imaging device and the object image are acquired, and a single image data having only the (G) portions is generated. As for blue (B), on the other hand, as shown in Fig. 4E, sixteen image data having different relative positions of the color imaging device and the object image are acquired, and a single image data composed of only the (B) portions is generated. In similar fashion, as for red (R), as shown in Fig. 4E, sixteen image data having different relative positions of the color imaging device and the object image are acquired, and a single image data composed of only the (R) portions is generated. In this case, the resolution of the monochromatic images is eight times as high for green G and 16 times as high for blue B and red R.

A black-and-white monochromatic image is generated by combining the high-resolution images of three colors RGB obtained by the image shift method described above. In this case, the images of R, G and B are generated to the same resolution. In generating a black-and-white monochromatic image data by combining the three-color image data in the same position of the three images of R, G and B, calculations are carried out for each pixel taking the spectral sensitivity, the luminous efficacy, etc. of the color imaging device into consideration, and after complete calculations for all the pixel data, the black-and-white monochromatic image is formed.

The generation of a black-and-white monochromatic image by this method requires the extra time of calculations for the black-and-white monochromatic image data in addition to the time required for the generation of the monochromatic images of the three colors R, G and B, resulting in a longer time for generating a monochromatic image. In the technique of shifting the image by a pitch of one half pixel described above, for example, the calculation time for synthesizing the black-and-white monochromatic image data is required in addition to the time of picking up the 16 images. Incidentally, since the 16 images are picked up at the same time for the three colors at each position, the three-cclor monochromatic images can be acquired in the time required to pick up 16 images.

As described above, the additional calculation time for the generating a black-and-white monochromatic image is required for the acquisition of a three-color monochromatic image.

### SUMMARY OF THE INVENTION

The object of the present invention is to provide an image processing apparatus and method for generating a monochromatic image of high resolution in a short time using the image shift scheme.

A black-and-white monochromatic image not substantially deteriorated in image quality could be acquired from an object image using only the green (G) color most contributive to the luminance signal. This was especially with the case with the operation of reading a voucher or slip printed in black and white. With a scanner, which generally reads a monochromatic image of characters and diagrams plotted on the paper, for example, there is no need of converting a color image into an exact black-and-white monochromatic image, but the only need is to generate a substantially compatible monochromatic image. The present inventor has empirically conceived this invention based on the above-mentioned fact.

According to the invention which has been achieved in view of the points described above, there is provided an image processing apparatus and method in which a monochromatic image only of a color associated with a filter having the highest pixel density is acquired with high resolution using the image shift scheme, and the image is processed with the particular monochromatic image alone.

An image processing apparatus according to an embodiment of the invention comprises an imaging optical system for picking up an image of an object, a color imaging device including a multiplicity of sets of four filters for three colors one of which uses two of the four filters, each filter being arranged at a position of a corresponding pixel on the imaging surface of the color imaging device, shift drive means for shifting the imaging optical system and the color imaging device relatively to each other by the length corresponding to a predetermined number of pixels, and a device for generating and outputting a monochromatic image only from the pixel data of the same color for different relative positions before and after the shift.

### BRIEF DESCRIPTION OF THE DRAWINGS

Fig. 1 is a block diagram showing an image processing apparatus according to an embodiment of the invention.
Figs. 2A, 2B and 2C are diagrams showing a method of acquiring a monochromatic image according to the invention.
Fig. 3 is a flowchart showing the steps of the process for acquiring a monochromatic image according to the invention.
Figs. 4A-4E are diagrams showing a conventional method of acquiring a monochromatic image.

### DESCRIPTION OF THE INVENTION

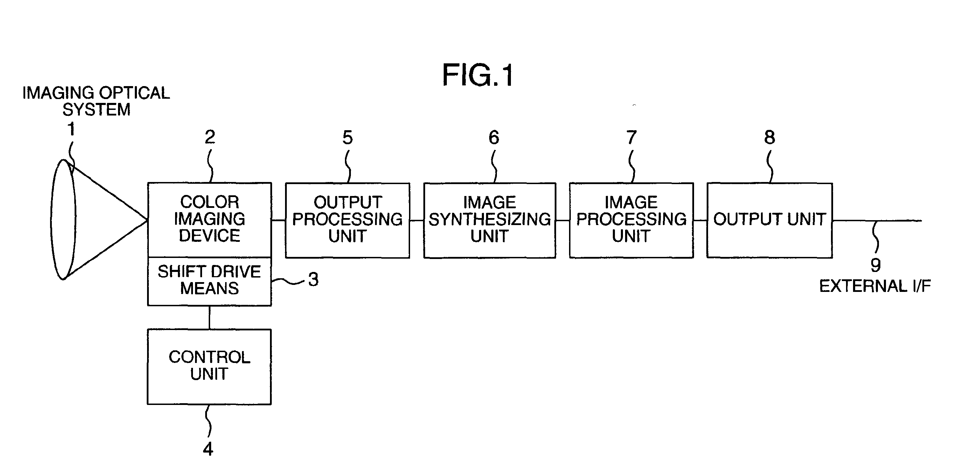

An embodiment of the invention will be explained with reference to Figs. 1 to 3.

In Fig. 1, an imaging optical system 1 forms an object image on the imaging surface of a color imaging device 2. The color imaging device 2 spatially samples the object image formed on the photo detectors arranged two-dimensionally on the imaging surface and, after photo-electric conversion, sends the signal to an output processing unit 5. The color imaging device 2 is preferably a solid state image sensing device such as an area CCD for picking up a two-dimensional image.

Shift drive means 3 is adapted to shift the relative positions of the color imaging device 2 and the object image and thus move the color imaging device 2 on the image forming surface using electrical inching means such as a piezoelectric device.

A control unit 4 moves the position of the color imaging device 2 to the next frame position having different relative positions by driving the shift means 3 while a frame of image data is being sent from the color imaging device 2 to the output processing unit 5. Thus, the image data for the next frame is acquired. In this way, a plurality of image data having different relative positions of the color imaging device 2 and the object image are acquired, and by interpolating adjacent pixel data, the resolution is improved.

The output processing unit 5 amplifies each analog image data sent from the color imaging device, and by sampling the base line portion and the signal portion alternately, performs the correlated double sampling for detecting a signal representing the difference between the base line portion and the signal portion. After A/D conversion, digital image data are output.

An image synthesizing unit 6 generates a single monochromatic image of an object of a higher resolution by interpolating adjacent pixel data from a plurality of image data having different relative positions. The image is synthesized by interpolation, i.e. by filling, in a single image data, the pixels having no pixel data with corresponding pixel data of a single image data at a different position. This interpolation requires no special calculation which takes each of the colors RGB into consideration.

An image processing unit 7 performs the shading correction for securing a uniform brightness over the whole screen, the γ correction for regulating the input/output characteristics, and the MTF correction for emphasizing the contour of the image. The image processing unit 7 can also convert a three-color image of RGB to a black-and-white monochromatic image as required. Also, the image processing unit 7 can select a color image or a monochromatic image of an object in compliance with an instruction from the user. An output unit 8 produces the synthesized image data from the image processing unit 7 on an output line 9 in a format suitable for the protocol of an external interface.

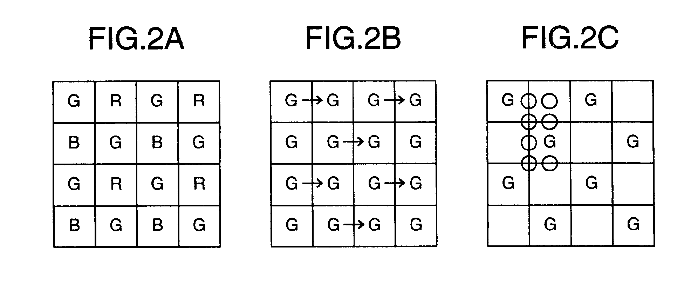

Figs. 2A, 2B and 2C are diagrams showing a method of acquiring a monochromatic image. For acquiring a monochromatic image, first, a plurality of color images of a specified color are generated by the pixel shift method. A monochromatic image of high resolution can be acquired using the color images thus generated. Fig. 2A is a diagram showing a color filter array of the aforementioned Bayer scheme which is formed on the imaging surface of the color imaging device. As described above, according to the Bayer scheme, green (G) filters for the luminance signal requiring a high resolution are arranged checkerwise with a density one half that of the photo detectors, while red (R) and blue (B) filters are arranged with a density of one fourth that of the photo detectors. As a color of the image data acquired by pixel shift, green (G) is selected. A plurality of image data of this color are acquired and synthesized into a single green (G) monochromatic image.

Specifically, the image data of green (G) is acquired at certain positions of the color imaging device and the object image. Then, the image data is acquired by shifting the relative positions of the color imaging device and the object image by a pitch of one pixel as indicated by arrows in Fig. 2B. The green (G) portions of the two image data thus acquired are extracted, and by interpolating the pixels lacking the pixel data of G in one image with the pixel data of the other image, a single monochromatic image of green (G) is produced by synthesis.

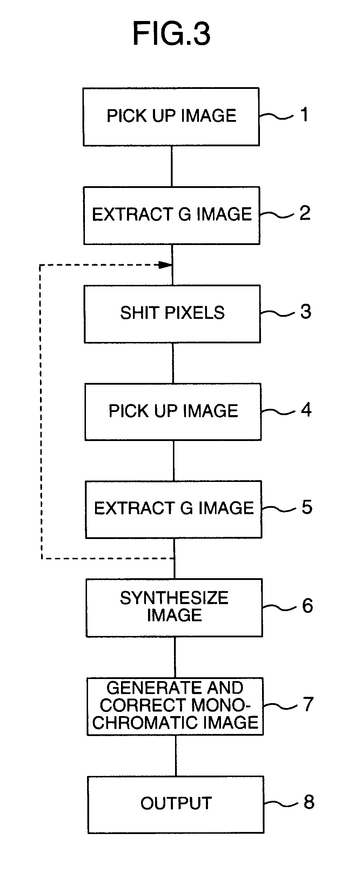

Fig. 3 is a flowchart showing the operation of the control unit 3 for performing the process of acquiring the monochromatic image. In step 1, an object image is picked up. In step 2, the green (G) portions of the image picked up are extracted. In step 3, the relative positions of the color imaging device and the object image are shifted by, say, one pitch as shown in Fig. 2B. In step 4, the object image is picked up. In step 5, the green (G) portions of the image picked up are extracted. In step 6, the green (G) portions of the images extracted in steps 2 and 5 are synthesized. In step 7, the synthesized image is corrected variously thereby to generate a monochromatic image. In step 8, the monochromatic image is output to an external circuit. As described later, steps 3 to 5 are repeated a predetermined number of times in the case where the pixel shift is set to one half pitch.

For acquiring the monochromatic image of blue (B), on the other hand, the relative positions of the color imaging device and the object image are shifted by a pitch of one pixel in three different directions as indicated by arrows in Fig. 4C to acquire four image data, after which the blue (B) portions of the four image data thus acquired are extracted thereby to synthesize a blue (B) monochromatic image. In similar fashion, the monochromatic image of red (R) can be acquired in the following way. The relative positions of the color imaging device and the object image are shifted by a pitch of one pixel in three different directions as indicated by arrows in Fig. 4C to acquire four image data, after which the red portions (R) of the four image data thus acquired are extracted to synthesize a red (R) monochromatic image. These operations for blue (B) and red (R) are not always necessary but can be carried out selectively as required.

In the case where the relative positions of the color imaging device and the object image are shifted by a pitch of one half pixel, the image data having a density twice as high as the density at which the photo detectors are arranged can be acquired for each color.

Specifically, as for green (G), as shown in Fig. 2C, eight image data having different relative positions of the color imaging device and the object image are acquired, and by extracting the green (G) portions of the eight image data thus acquired, a single green (G) monochromatic image can be synthesized.

For acquiring the monochromatic image of blue (B), on the other hand, as shown in Fig. 4E, sixteen image data having different relative positions of the color imaging device and the object image are acquired, and by extracting the blue (B) portions of the sixteen image data thus acquired, a single blue (B) monochromatic image can be synthesized. In similar fashion, for acquiring the monochromatic image of red (R), as shown in Fig. 4E, sixteen image data having different relative positions of the color imaging device and the object image are acquired, and by extracting the red (R) portions of the sixteen image data thus acquired, a single red (R) monochromatic image can be synthesized.

In the Bayer scheme, the green (G) filters are arranged with a density twice as high as the blue (B) filters or the red (R) filters. Specifically, although eight green (G) images are picked up, sixteen images are picked up for blue (B) and red (R), respectively. In the case where a monochromatic image of only green (G) is acquired with an increased density, therefore, the number of images picked up is one half of those for blue (B) or red (R). Thus, the time required for imaging is also reduced to one half for green (G). Further, since no additional calculation time is required, the time for picking up only eight images is required to generate a monochromatic image of green (G). In this way, according to this embodiment of the invention, the time required for generating a monochromatic image can be shortened to one half or less of the time conventionally required.

As described above, a satisfactory monochromatic image can be acquired using only green (G) color to which the luminance signal contributes in a higher ratio, except in the case where the object to be read belongs to the green group as a whole. Especially when reading vouchers or slips printed in black and white, the image quality is not deteriorated.

The foregoing description concerns an example in which the amount of pixel shift is set to a pitch of 1/2 pixel. However, the same principle is applicable also to the amount of pixel shift at a pitch of 1/n pixel. The time shortened for acquiring a monochromatic image is increased in proportion to n.

Apart from the Bayer scheme used for arranging primary-color filters of the color imaging device, a monochromatic image can be generated also by other methods of arrangement using the output of the photo detectors having filters of a color with the largest occupancy rate of the light receiving surface. Also, complementary color filters (Ye, Mg, Cy) can be used for the filters described above.

## Claims

1. An image processing apparatus comprising:
an imaging optical system for forming an image of an object on an imaging surface;
a color imaging device including a plurality of photo detectors arranged on said imaging surface, each of said photo detectors forming a pixel, a multiplicity of sets of four filters for three colors, two of said four filters being used for selected one of said three colors, said filters being arranged at positions corresponding to said photo detectors, respectively, said object image being formed on said photo detectors through each of said filters by said imaging optical system;
shift drive means for shifting said imaging optical system and said photo detectors relatively to each other by a length corresponding to a predetermined number of pixels in said imaging surface; and
an image processing unit for generating an image using a plurality of image data picked up before and after said shift;
wherein said image processing unit generates and outputs a single monochromatic image using only the pixel data detected by the photo detectors having said two filters of a single color.

2. An image processing apparatus according to Claim 1,
wherein said color filters are arranged according to the Bayer scheme.

3. An image processing apparatus according to Claim 1,
wherein said shift drive means shifts said imaging optical system and said photo detectors relatively to each other by a length corresponding to 1/n (n: integer) of a pixel.

4. An image processing apparatus according to Claim 1,
wherein said single color used by said two filters is green (G).

5. An image processing apparatus according to Claim 1,
wherein said image processing unit interpolates the pixels lacking the pixel data of said single color in an image data with the pixel data in another image data.

6. An image processing method comprising the steps of:
picking up the image of an object formed on the imaging surface of an imaging optical system, by a color imaging device including a multiplicity of sets of four filters two of which process selected one of the three primary colors, said filters being arranged at positions corresponding to said photo detectors, respectively, on said imaging surface;
extracting the pixel data of the pixels corresponding to said two filters of a single color from the image data of said image picked up;
shifting said imaging optical system and said color imaging device by a length corresponding to 1/n (n: integer) of a pixel relatively to each other in said imaging surface;
picking up, by said color imaging device, the image of the object formed on said imaging surface after said shift;
extracting the pixel data of the pixels corresponding to said two filters of a single color from the image data of said image picked up after said shift; and
generating a monochromatic image by synthesizing a plurality of pixel data extracted before and after said shift.

7. A method according to Claim 6,
wherein said shifting step, said image pickup step and said extraction step are executed repeatedly a plurality of times for different shift positions.
